(19) **Europäisches Patentamt / European Patent Office / Office européen des brevets**

(11) **EP 4 137 594 B1**

(12) **EUROPEAN PATENT SPECIFICATION**

(45) Date of publication and mention
of the grant of the patent:
**04.06.2025 Bulletin 2025/23**

(21) Application number: **21787956.8**

(22) Date of filing: **12.04.2021**

(51) International Patent Classification (IPC):
*C22B 1/16* (2006.01)    *B01J 2/12* (2006.01)
*C21B 13/00* (2006.01)    *C21B 13/08* (2006.01)
*C22B 1/216* (2006.01)    *C22B 1/243* (2006.01)
*F27B 7/00* (2006.01)

(52) Cooperative Patent Classification (CPC):
**C21B 13/0086; C21B 13/08; C22B 1/16;
C22B 1/243; F27B 7/00;** F27B 2007/005

(86) International application number:
**PCT/JP2021/015167**

(87) International publication number:
**WO 2021/210533 (21.10.2021 Gazette 2021/42)**

(54) **METHOD FOR PRODUCING SINTERED ORE**

VERFAHREN ZUR HERSTELLUNG VON GESINTERTEM ERZ

PROCÉDÉ DE PRODUCTION DE MINERAI FRITTÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.04.2020 JP 2020072764**

(43) Date of publication of application:
**22.02.2023 Bulletin 2023/08**

(73) Proprietor: **JFE Steel Corporation
Tokyo 100-0011 (JP)**

(72) Inventors:
• **FUJIWARA, Shohei
Tokyo 100-0011 (JP)**

• **TAKEHARA, Kenta
Tokyo 100-0011 (JP)**
• **OTSUKA, Hiroshi
Tokyo 100-0011 (JP)**
• **HORITA, Kenya
Tokyo 100-0011 (JP)**
• **HIGUCHI, Takahide
Tokyo 100-0011 (JP)**

(74) Representative: **Haseltine Lake Kempner LLP
Bürkleinstrasse 10
80538 München (DE)**

(56) References cited:
WO-A1-2010/114152    JP-A- 2003 293 044
JP-A- 2003 293 044    JP-A- 2016 172 903
JP-A- 2016 172 903    JP-A- 2019 127 647

## Description

Technical Field

The present invention relates to a method for producing sintered ore that is a raw material for a blast furnace, and particularly to a method for producing sintered ore that is characterized in that sintered ore is produced using granulated raw material for sintering produced with a focus on the droplet diameter of moisture used during granulation of compounded raw material for sintering.

Background Art

Sintered ore is usually produced through the following steps. First, auxiliary raw material powder such as limestone, silica stone, or serpentine, miscellaneous raw material powder such as dust, scale, or return ore, and solid fuel such as coke breeze are mixed in appropriate amounts into powdery iron ore of multiple types of brands (e.g., powdery iron ore called sinter feed of up to about 10 mm) to prepare compounded raw material for sintering. Next, a necessary amount of moisture is added to the obtained compounded raw material for sintering, and the compounded raw material for sintering with the moisture added thereto is mixed and granulated using a granulator, such as a drum mixer, to obtain granulated raw material for sintering. Then, the obtained granulated raw material for sintering is charged into a sintering machine and sintered to produce sintered ore.

Generally, the component materials of the compounded raw material for sintering each contain a predetermined amount of moisture, so that, when granulated, the component materials aggregate and turn into quasi-particles. The granulated raw material for sintering resulting from turning into quasi-particles serves to secure favorable gas permeability of a sintering raw material charged layer that is formed when the raw material is charged onto the pallet of the sintering machine, and thus is effective for the smooth progress of the sintering reaction.

In the method for producing sintered ore described above, when moisture is added unevenly or in an insufficient amount during granulation of the compounded raw material for sintering, only fine powder with a small particle diameter may aggregate to form coarse particles with low strength, or fine powder with a small particle diameter may remain as particles with a small particle diameter, which causes a decrease in the gas permeability inside the sintering raw material charged layer. Under these circumstances, studies focusing on how to add water to compounded raw material for sintering during granulation have been hitherto conducted.

For example, in Patent Literature 1, a water sprinkling flow rate, a spraying angle, a water sprinkling distance, etc. are specified according to the change of a surface of compounded raw material for sintering inside a granulator, and also an upper limit of the droplet diameter of water to be added is specified, to prevent the generation of coarse particles and mitigate the generation of aggregated particles composed only of fine powder.

Citation List

Patent Literature

Patent Literature 1: JP-A-2016-172903

Non-Patent Literature

Non-Patent Literature 1: Kawahara et al. "Simultaneous Measurements of Droplet Diameter and Velocity Using Phase Doppler Anemometer (PDA/PDPA)," The Japan Society of Fluid Mechanics, "Nagare," vol. 27 (2008), pp. 303

Summary of Invention

Technical Problem

However, the technology proposed in Patent Literature 1 faces a problem in that the gas permeability of the sintering raw material charged layer decreases, as it can mitigate the generation of coarse particles with a large particle diameter but cannot mitigate the generation of fine particles with a small particle diameter. As a result, many fine particles with an extremely small particle diameter are generated, so that the gas permeability inside the sintering raw material charged layer and consequently inside a sintered layer decreases and the production rate of sintered ore decreases. Moreover, the strength of sintered ore decreases and the product yield decreases, and consequently the gas permeability inside a blast furnace that uses the sintered ore decreases.

In view of these problems, the present inventors have vigorously explored a method that produces desirable granulated raw material for sintering and can consequently achieve higher productivity of sintered ore etc. by setting an optimal range of the droplet diameter of moisture added during granulation for improving the gas permeability inside the sintering raw material charged layer, instead of focusing on generation of coarse particles or fine particles.

An object of the present invention is to propose a method that increases the gas permeability of a sintering raw material charged layer on a sintering machine pallet and achieves higher productivity and improved strength of sintered ore by focusing on moisture, i.e., water, added into compounded raw material for sintering and adjusting the mean droplet diameter of the moisture to be within an optimal range so as to efficiently disperse the moisture into the compounded raw material for sintering in a granulator and thus obtain desirable granulated raw material for sintering.

Solution to Problem

The method of the present invention developed to overcome the above-described problem of the related art and achieve the object is a method for producing sintered ore that obtains sintered ore by granulating compounded raw material for sintering including iron ore powder of multiple types of brands using a granulator and sintering obtained granulated raw material for sintering by a sintering machine, wherein not less than 80mass% of moisture to be added during granulation of the compounded raw material for sintering is supplied at a mean droplet diameter of not less than 120 $\mu$m and not more than 2000 $\mu$m, characterized in that the moisture contains fine particles with a particle diameter of not more than 15 $\mu$m at a ratio of not less than 0.5 mass% and not more than 12 mass% relative to the compounded raw material for sintering.

The present invention according to the above configuration would be able to provide more preferable solutions when the method further has the following characteristics.

1. The moisture has a mean droplet diameter of not less than 560 $\mu$m and not more than 1570 $\mu$m.
2. The moisture has a mean droplet diameter of not less than 800 $\mu$m and not more than 1570 $\mu$m.
3. With positions of an inlet and an outlet of the granulator in a length direction being indicated as 0% and 100%, respectively, the moisture is added to the compounded raw material for sintering at a position within a range of 0% to 70%.
4. With positions of an inlet and an outlet of the granulator in a length direction being indicated as 0% and 100%, respectively, the moisture is added to the compounded raw material for sintering at a position within a range of 15% to 70%.
5. With positions of an inlet and an outlet of the granulator in a length direction being indicated as 0% and 100%, respectively, the moisture is added to the compounded raw material for sintering at a position within a range of 20% to 50%.
6. With positions of an inlet and an outlet of the granulator in a length direction being indicated as 0% and 100%, respectively, the moisture is added to the compounded raw material for sintering at a position within a range of 20% to 75%.
7. With positions of an inlet and an outlet of the granulator in a length direction being indicated as 0% and 100%, respectively, the moisture is added to the compounded raw material for sintering at a position within a range of 30% to 60%.
8. A center of a spraying direction of a water spray nozzle when supplying the moisture is directed at compounded raw material for sintering located within a range of not less than 45 degrees to not more than 90 degrees in a drum rotation direction, with 0 degrees being a vertically downward direction, in a cross-section of the granulator perpendicular to a rotational axis.
9. A moisture content before the compounded raw material for sintering is charged into the granulator is not more than 5mass%.
10. The mean droplet diameter is a droplet diameter that gives an arithmetic mean of droplet volumes or a Sauter mean diameter, and not less than 80 mass% of droplets of the moisture have a diameter within a range of 0.1 to 3 times the mean droplet diameter.

Advantageous Effects of Invention

The method of the present invention according to the above-described configuration contributes greatly to mitigating the generation of fine particles in granulating compounded raw material for sintering by a granulator, as well as improves not only the gas permeability of granulated raw material for sintering themselves but also the gas permeability of a raw material charged layer on a sintering machine pallet. As a result, the method achieves not only higher productivity of sintered ore and improved strength of sintered ore but also higher gas permeability inside a blast furnace.

Brief Description of Drawings

FIG. 1 is a schematic diagram showing an overview of gas permeability measurement test equipment.
FIG. 2 is an illustration of an adhesion force ($\sigma$) between iron ore particles.
FIG. 3 is a graph showing a relationship between a gas permeability index (JPU) and a droplet diameter in an example.
FIG. 4 is a graph showing how a particle size distribution spreads (Isp) in examples.
FIG. 5 is an illustration of a spraying direction of sprayed water toward a sloping surface of accumulated compounded raw material for sintering inside a drum mixer.

Description of Embodiments

The present inventers have studied the moisture that is used when granulating granulated raw material for sintering, particularly the relationship between the droplet diameter of the water and the gas permeability of the produced granulated raw material for sintering by varying the droplet diameter of the water. While a water spraying nozzle generally has a specific droplet diameter (a droplet diameter at a predetermined pressure indicated by the manufacturer), it is desirable that the droplet diameter of water to be added is actually measured beforehand according to the granulator before the moisture is added into the granulator.

To measure the droplet diameter, a method of performing an image analysis of not less than 100 droplets using a high-speed camera and calculating the arithmetic mean diameter is adopted. For measurement of the droplet diameter, for example, counting and calculation may be automatically performed by the method described in Non-Patent Literature 1 or by means of a commercially available laser Doppler measurement instrument, or the droplet diameter may be obtained by calculation based on the liquid to be used and spraying conditions.

It has been found that, in actual water spraying, about 80 mass% falls within a range of the mean droplet diameter × 50% to the mean droplet diameter × 200%, but that droplets such as coarse droplets that fall after collecting around a spray nozzle outlet do not fall within the range of the mean droplet diameter × 50% to the mean droplet diameter × 200%. However, the study by the present inventers has also found that, even when such droplets that do not fall within the range of the mean droplet diameter × 50% to the mean droplet diameter × 200% are generated, they have little impact on the granulation action if the ratio thereof is less than 20 mass%. In the present invention, therefore, it is necessary to adjust the size of water to be added during granulation such that not less than 80 mass% thereof has a predetermined droplet diameter.

In actual water spraying, other than the coarse droplets that fall after collecting around the spray nozzle outlet, droplets that are significantly coarser than the mean droplet diameter may be generated due to factors including deterioration of the nozzle and addition of an ultrafine powdery raw material to water. Such significantly coarse droplets prevent the present invention from producing its effects. Moreover, these droplets, even when small in number, each have a significantly large volume; as such, in adjusting the granulated raw material for sintering to a predetermined moisture content, they reduce the amount of water with a preferred droplet diameter and conversely lessen the workings and effects. To correctly evaluate the influence of such significantly coarse droplets, it is desirable to use, as the mean droplet diameter, a droplet diameter that gives an arithmetic mean of droplet volumes or a Sauter mean average, instead of the arithmetic mean diameter. The droplet diameter that gives the arithmetic mean of droplet volumes can be obtained by the following Formulas (a) and (b), and the Sauter mean diameter can be obtained by the following Formula (c). The droplet diameter that gives the arithmetic mean of droplet volumes and the Sauter mean average assume a value larger than the arithmetic mean diameter when droplets with a significantly large droplet diameter increase in a droplet diameter distribution, which makes them suitable for correctly evaluating the influence of significantly coarse droplets.

$$Va = \Sigma v \,/\, n \,\,\ldots\,\, (a)$$

$$Da = (6 \times Va \div \pi)^{1/3} \,\,\ldots\,\, (b)$$

$$Dz = \Sigma d^3 \div \Sigma d^2 \,\,\ldots\,\, (c)$$

In these Formulas, Va is the arithmetic mean $(m^3)$ of droplet volumes, v is the volume $(m^3)$ of each droplet, n is the number of droplets, Da is the droplet diameter (m) that gives the arithmetic mean of droplet volumes, Dz is the Sauter mean diameter (m), and d is the droplet diameter (m) of each droplet.

When using the droplet diameter that gives the arithmetic mean of droplet volumes or the Sauter mean diameter as the mean droplet diameter, it is desirable that not less than 80 mass% falls within a range of the mean droplet diameter × 10% to the mean droplet diameter × 300%. Effective measures to achieve this include not using a deteriorated nozzle and appropriately managing the amount of ultrafine powdery raw material to be added to water.

Next, the gas permeability of granulated matter (granulated raw material for sintering) produced by a granulator, such as a drum mixer, can be evaluated by measuring a gas permeability index (JPU). In the present invention, the term gas permeability index (JPU) refers to a gas permeability index measured by suctioning atmospheric air in a downward direction, as it is, through a sintering raw material charged layer that is formed as quasi-particles are charged onto a pallet of a sintering machine. This gas permeability index (JPU) was calculated using the following Formula (1).

$$JPU = V \,/\, S \times (h \,/\, \Delta P)^{0.6} \,\,\ldots\,\, (1)$$

Here, V is an air volume $(Nm^3/min)$, S is the cross-sectional area $(m^2)$ of the raw material charged layer, h is the height (mm) of the charged raw material, and $\Delta P$ is a pressure loss $(mmH_2O)$.

It is generally known that the gas permeability index (JPU) expressed by the above Formula (1) assumes a large value when the gas permeability of the sintering raw material charged layer is high, and that the gas permeability index (JPU) expressed by the above Formula (1) assumes a small value when the gas permeability of the sintering raw material charged layer is low.

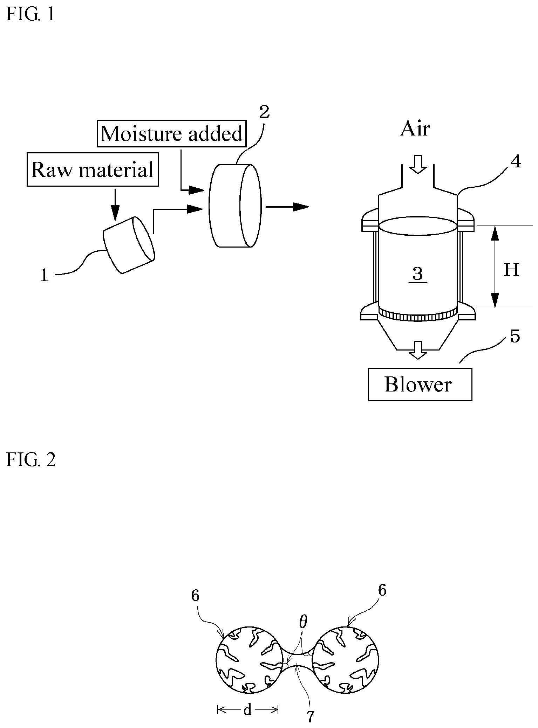

To test this gas permeability, the equipment shown in FIG.1 was used. In this test, sintering raw material was kneaded for three minutes by a concrete mixer 1 in advance, and then was granulated with moisture added for five minutes by a drum mixer 2 that is a granulator. Thereafter, raw material 3 having been granulated (granulated raw material for sintering) was charged into a test pot 4 having a diameter of 150 mm so as to have a raw material layer thickness H of 380 mm (raw material weight: 20 kg). Then, air was suctioned by a suction blower 5 connected to a lower part of the test pot 4.

The gas permeability index (JPU) is a direct indicator of the quality of sintered ore, as it evaluates the gas permeability of a sintering raw material charged layer at the point when granulated matter (granulated raw material for sintering) is charged onto a pallet of a sintering machine. Measuring the particle size distribution of the granulated matter that is one of the strongest factors affecting the JPU is effective for improving the JPU.

Next, as the indicator of the particle size distribution, the ratio of coarse particles as in Patent Literature 1 is not adequate, and an indicator that can evaluate also a decrease in the gas permeability due to voids being filled up by fine particles is desirable. As such an indicator of the particle size distribution, the present inventers have adopted $I_{sp}$. Disclosed on pages 1627 to 1634 of "Iron and Steel," 57 (1971), by Fukutake et al., $I_{sp}$ can be obtained from $D_p = 1 / \Sigma(w_i / d_i)$, where $w_i$ is a particle ratio, $d_i$ is a particle diameter, $I_s = D_p^2 \Sigma w_i (1 / d_i - 1 / D_p)^2$, $I_p = (1 / D_p)^2 \Sigma w_i (d_i - D_p)^2$, and $I_{sp} = 100 \times \sqrt{(I_s \times I_p)}$. $I_s$ represents dispersion in a range of small particle diameters relating to variation in the specific surface area of particles, and $I_p$ represents dispersion in a range of large particle diameters relating to variation in the particle diameter. As $I_{sp}$ is a geometric mean of $I_s$ and $I_p$ and reflects both the dispersion in the range of small particle diameters and the dispersion in the range of large particle diameters, it can be said to be desirable as an indicator of gas permeability. That the value of $I_{sp}$ is closer to zero means that the particle size distribution is concentrated in a narrower range, which is an indicator of good gas permeability with fewer gaps being filled up by particles with different particle diameters.

In addition to considering the droplet diameter of water for the moisture to be added (water to be added) described above, considering what water to use is also an important perspective in the method of the present invention. Specifically, this was considered with a focus on whether to use, as the water to be used during granulation, simple water or so-called granulation water that is unique to the present invention and obtained by dispersing (including) fine powder in water beforehand.

It is generally known that fine powdery ore 6 composed mostly of particles with a particle diameter of not more than 200 μm like pellet feed turn into coarse particles (aggregated particles) with a low bonding force as small-diameter particles (fine powder) thereof aggregate during granulation. As schematically shown in FIG. 2, this is known to be caused by a phenomenon that an adhesion force σ due to surface tension γ of water expressed by the following Formula (2) becomes higher as the particle diameter becomes smaller.

[Formula 1]

$$\sigma = CS \frac{1 - \varepsilon}{\varepsilon} \frac{\gamma \cos \theta}{d} \quad \cdots (2)$$

σ: Adhesion force
γ: Surface tension of water

θ: Angle of contact with powder
C: Constant determined by material
S: Liquid filling ratio (= 0.6)
ε: Void ratio of granulated matter
d: Particle diameter

Next, the present inventers have thought that, if an appropriate amount of particles with an even smaller particle diameter is used for granulation, a strong adhesion force σ may be produced and the particles may be expected to act as a binder 7 (binding agent). Here, to produce the adhesion force of the binder 7, ultrafine powder with a particle diameter of not more than 15 μm is conceivable. However, particles with such a particle diameter are ultrafine powder close to floating particulate substance defined as having a particle diameter of not more than 10 μm, and are extremely slow to fall under their own weight in the air. Therefore, when these particles are charged into a granulator in a dry state, they add to the amount of particles that float and scatter. On the other hand, when these particles are charged into a granulator in a moistened state to prevent floating and scattering, ultrafine powder with a particle diameter of not more than 15 μm does not disperse over the surfaces of other component materials of the granulated raw material for sintering, and thus the action of the binder 7 is lessened.

Therefore, the present inventers have decided to use, as the water to be added during granulation, granulation water obtained by adding ultrafine powder with a particle diameter of not more than 15 μm beforehand, and set the droplet diameter of this granulation water to a preferable range. We have newly learned that using such granulation water can disperse the ultrafine powder with a particle diameter of not more than 15 μm over the surfaces of other component materials of the granulated raw material for sintering, and at the same time can improve the particle size distribution after granulation and increase the gas permeability.

As a raw material containing a large amount of ultrafine powder with a particle diameter of not more than 15 μm, for example, iron-making dust of which a harmonic mean of primary particle diameters is about 1 to 5 μm, or a material obtained by further pulverizing concentrate powder or pellet feed obtained by ore dressing of iron ore can be used.

(Method of Adding Ultrafine Powder to Water with Adjusted Droplet Diameter)

Methods to be used in granulating compounded raw material for sintering containing a large amount of ultrafine powder with a particle diameter of not more than 15 μm include a method of directly charging the ultrafine powder into the granulator along with other component materials of the granulated raw material for sintering and a method of mixing the ultrafine powder into water before being added. For example, in the granulation method of charging the ultrafine powder into the granulator along with other compounded raw material for sintering, while ultrafine powder with a particle diameter of 15 $\mu$m or smaller tends to float and scatter as described above, charging the ultrafine powder into the granulator at the same time as other component materials of the granulated raw material for sintering having large particle diameters can mitigate the floating and scattering. Weakly aggregating the ultrafine powder by slightly moistening it beforehand can also mitigate the floating and scattering.

On the other hand, the method of adding the ultrafine powder in a state of the granulation water obtained by mixing it into water beforehand has an advantage in that, not only are scattering and floating considerably mitigated, but also the use yield of ultrafine powder with a particle diameter of not more than 15 $\mu$m is good. Another advantage is that, since the ultrafine powder can be added so as to disperse over the granulation raw material inside the granulator, generation of coarse particles composed of fine particles and generation of fine particles due to insufficient granulation can be mitigated to narrow the particle size distribution of the particles having been granulated.

As another method of the present invention that uses granulation water containing ultrafine powder, quasi-ultrafine powder with a particle diameter exceeding 15 $\mu$m may be used by being mixed into ultrafine powder with a particle diameter of not more than 15 $\mu$m. However, when the number of particles with a large diameter increases, it becomes difficult to finely adjust the droplet diameter of the granulation water, and when the amount of particles in the granulation water is too large, it becomes difficult to transport the granulation water. It is therefore desirable that the amount of the ultrafine powder with a particle diameter of not more than 15 $\mu$m is more than 50 mass% relative to the total weight of particles to be mixed into the granulation water. There is an appropriate range for the amount of water used for granulation (normally 5 to 10 mass% relative to granulation raw material). Therefore, the ratio of the weight of the ultrafine powder with a particle diameter of not more than 15 $\mu$m relative to the total weight of the granulation water and the particles to be mixed into the granulation water is desirably at least 10 mass%, and the higher the ratio, the better.

In this method, the ratio of the ultrafine powder (particle diameter: not more than 15 $\mu$m) used by being mixed into the granulation water to be sprayed into the granulator relative to the total amount of sintering raw material charged into the granulator is not less than 0.5 mass% and not more than 12 mass%. When this ratio is not less than 0.5 mass%, the effect of narrowing the particle size distribution of particles having been granulated can be stably produced. On the other hand, when this ratio exceeds 12 mass%, a mixed liquid (granulation water) of the water and the ultrafine powder noticeably exhibits a non-Newtonian flow, so that the droplet diameter varies greatly and the workings and effects of the present invention are impaired.

(Position of Adding Water (Granulation Water))

Next, the present inventers have studied about the position of adding water or granulation water in a length direction of the granulator. It is known that granulated particles having extremely large diameters after granulation have low strength and therefore are not desirable. It is also known that when the granulated particles vary widely in diameter after granulation, the gas permeability decreases as small-diameter particles fill up gaps between large-diameter particles, which impairs the productivity of the sintering machine. Therefore, in addition to preventing the granulated particles from having extremely large diameters after granulation, it is also important to reduce the variation, in other words, mitigate the generation of granulated particles that are extremely small.

To this end, it is desirable that the position of adding moisture inside a granulator like a drum mixer is at a stage preceding a state where granulated particles immediately before being discharged have grown sufficiently. In view of this, it is desirable that, with positions of a part for charging raw material before granulation (inlet) and a part for discharging granulated matter after granulation (outlet) of the granulator in the length direction being indicated as 0% and 100%, respectively, the moisture is supplied to the compounded raw material for sintering at a position within a range of 0% to 70%. Further, it is desirable that the position of adding the moisture is a position after the compounded raw material for sintering that was uneven immediately after charging have been evenly mixed. In view of these points, it is desirable that the moisture is supplied to the compounded raw material for sintering at a position within a range of 15% to 70% in the length direction of the granulator, and it is further desirable that the moisture is supplied at a position within a range of 20% to 50%.

When the water to be added into the granulator is granulation water containing ultrafine powder, it is desirable that the granulation water is added at a position within a range of 20 to 75%, a little farther downward than in the case of water alone, and it is more desirable that the granulation water is added at a position within a range of 30 to 60%. This is because the binder effect by the ultrafine powder contained in the granulation water is exhibited more noticeably when fine powder and ultrafine powder inside the compounded raw material for sintering charged into the granulator have aggregated to some extent.

(Addition in Radial Direction of Granulator)

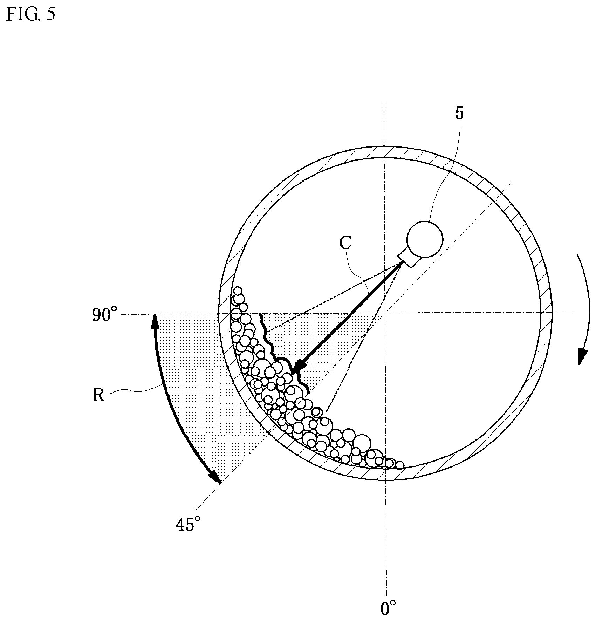

In the present invention, it is important to evenly disperse water into the compounded raw material for sintering being granulated. Therefore, it is desirable that droplets of water is added so as to directly reach a sloping surface of the accumulated compounded raw material for sintering inside the granulator, instead of reaching an inner wall surface of the granulator. In particular, as shown in FIG. 5, it is further desirable that a center C of a spraying direction of a spray nozzle that sprays the water (granulation water) is directed at the sloping surface of the accumulated compounded raw material for sintering located within a range R of not less than 45° and not more than 90° in a drum rotation direction, with 0° being the vertically downward direction, in a cross-section of the drum mixer perpendicular to a rotational axis, i.e., the range R is a preferred range of a direction in which the center of spraying of the granulation water is directed at the granulation raw material. This is because, compared with when the water (granulation water) is added so as to be focused on a range of not less than 0° and not more than 45°, when the water is added so as to be focused on the range of not less than 45° and not more than 90°, the particles of the compounded raw material for sintering slide down a longer distance while rotating over the sloping surface of the accumulated compounded raw material for sintering after the droplets reach the surfaces of particles of the compounded raw material for sintering, and thus dispersion of water is promoted also after the droplets reach the compounded raw material for sintering.

(Moisture of Compounded Raw Material for Sintering Themselves)

Generally, the moisture content in compounded raw material for sintering being granulated inside a granulator affects the particle diameter and the strength of granulated material and is therefore managed to be within a predetermined range. However, in compounded raw material for sintering before being charged into the granulator, there are some brands of materials that contain moisture due to the influence of rain etc. in the course of storage in an outdoor yard, and that vary in moisture content due to the influence of the weather, the storage period, etc. This makes it necessary to adjust the amount of water added inside the granulator according to the moisture content of the compounded raw material for sintering before being charged into the granulator. Moreover, since it is important in the present invention to disperse water inside the compounded raw material for sintering in granulation, it is not desirable to reduce the amount of water added into the granulator even when some brands of the compounded raw material for sintering before being charged into the granulator have a high moisture content. Therefore, to secure a fixed amount of water to be added into the granulator, it is desirable to adjust the mean moisture content of the compounded raw material for sintering before being charged into the granulator to not more than 7.5 mass% beforehand, and it is further desirable to adjust the mean moisture content to not more than 5 mass%. Then, the effect of the present invention of adding water in the granulator is enhanced.

As a method for adjusting the mean moisture content of the compounded raw material for sintering before being charged into the granulator, the raw materials may be appropriately mixed and adjusted to the aforementioned water content (not more than 7.5mass%) on the assumption that the moisture content varies according to the brand or the period of storage in an outdoor yard.

Reference Example 1

<Spraying of Water Containing No Ultrafine Powder>

A granulation test by spraying water in a laboratory and measurement of the resulting droplet diameters were performed. As an experiment device, compounded raw material for sintering was charged into a drum mixer with a diameter of 300 mm and granulation was performed while water was sprayed. In this case, the droplet diameter was controlled by changing the type of nozzle. Quasi-particles after granulation were used for a gas permeability test and the degree of air permeation was measured. The droplet diameters were measured by the method of performing an image analysis of 100 droplets using a high-speed camera and calculating an arithmetic mean dimeter.

The result of this test is shown in FIG, 3. Compared with a comparative example in which no nozzle was used and a large part of water was a liquid column, an improving effect on the gas permeability was recognized with the droplet diameter within a range of not less than 120 $\mu$m to not more than 2000 $\mu$m. Further, a greater improvement was recognized with the droplet diameter within a range of not less than 560 $\mu$m to not more than 1570 $\mu$m, and an even greater improvement was recognized with the droplet diameter within a range of not less than 800 $\mu$m to not more than 1570 $\mu$m.

Example 2

<Spraying of Water Containing Ultrafine Powder (Granulation Water)>

Under the same conditions as in Reference Example 1, iron-making dust of which predominant particles had a particle diameter of not more than 15 $\mu$m was mixed into water at a ratio of 300 g to 1 kg of water to be added to obtain granulation water. This granulation water was sprayed at a droplet diameter of 1320 $\mu$m and the particle diameter after granulation was measured. The particles with a particle diameter of not more than 15 $\mu$m that were sprayed into the granulator by being mixed into the granulation water were set to 2 mass% of the total amount of sintering raw material charged into the granulator.

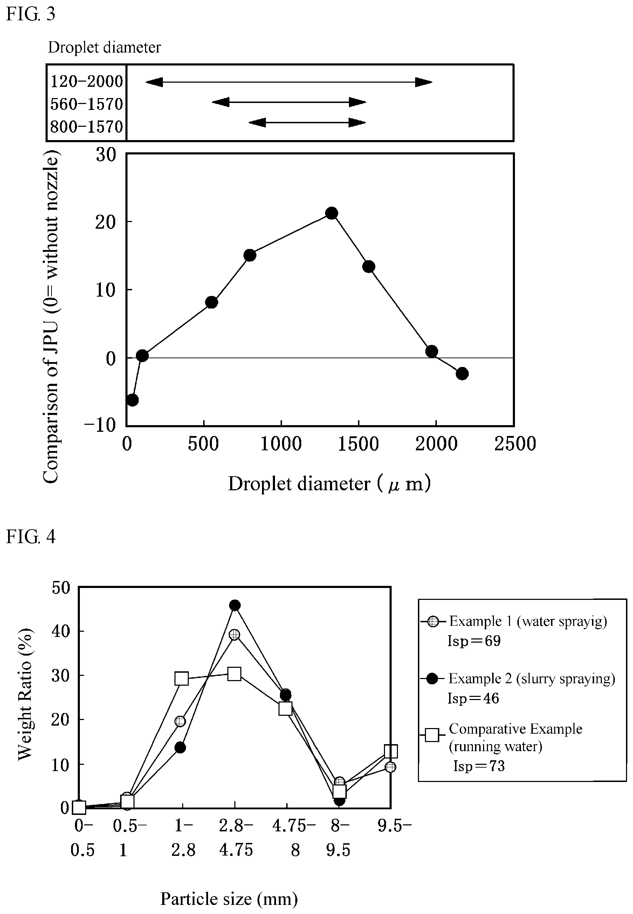

The result is shown in FIG. 4. Example 1 in FIG. 4 shows values obtained by spraying only water without iron-making dust mixed into it at a droplet diameter of 1320 $\mu$m. The comparative example in FIG. 4 shows values obtained by adding only water without iron-making dust mixed into it in a state where major part of the water was a liquid column. As is clear from FIG. 4, the spread of the particle size distribution is: the comparative example > Reference Example 1 > Example 2. While Isp that is an indicator of the spread of the particle size distribution is 73 in the comparative example, it is improved to 69 in Reference Example 1 and significantly improved to 46 in Example 2.

When the ratio of particles having a particle diameter of not more than 15 μm that were sprayed into the granulator by being mixed into the granulation water relative to the total amount of sintering raw material charged into the granulator was not less than 0.5 mass% and not more than 12 mass%, Isp lower than that of Reference Example 1 was obtained.

Industrial Applicability

The above-described method of the present invention is not only simply applied to a granulation technology for producing sintered ore but also applied to producing of raw material for blast furnaces other than producing of sintered ore. For example, application to a technology of producing agglomerated ore is also conceivable.

Reference Signs List

1    Concrete mixer

2    Drum mixer

3    Granulation raw material

4    Test pot

5    Suction blower

6    Fine powdery ore

7    Binder

H    Raw material layer thickness

**Claims**

1.  A method for producing sintered ore that obtains sintered ore by granulating compounded raw material for sintering including iron ore powder of multiple types of brands by a granulator and sintering obtained granulated raw material for sintering by a sintering machine, wherein

    not less than 80 mass% of moisture to be added during granulation is supplied at a mean droplet diameter of not less than 120 μm and not more than 2000 μm,
    **characterized in that**
    the moisture contains fine particles with a particle diameter of not more than 15 μm at a ratio of not less than 0.5 mass% and not more than 12 mass% relative to the compounded raw material for sintering, and
    wherein the mean droplet diameter is measured by performing an image analysis of not less than 100 droplets using a high-speed camera and calculating the arithmetic mean diameter.

2.  The method for producing sintered ore according to claim 1, wherein
    the moisture has a mean droplet diameter of not less than 560 μm and not more than 1570 μm.

3.  The method for producing sintered ore according to claim 1 or 2, wherein
    the moisture has a mean droplet diameter of not less than 800 μm and not more than 1570 μm.

4.  The method for producing sintered ore according to any one of claims 1 to 3, wherein,
    with positions of an inlet and an outlet of the granulator in a length direction being indicated as 0% and 100%, respectively, the moisture is added to the compounded raw material for sintering at a position within a range of 0% to 70%.

5.  The method for producing sintered ore according to any one of claims 1 to 4, wherein,
    with positions of an inlet and an outlet of the granulator in a length direction being indicated as 0% and 100%, respectively, the moisture is added to the compounded raw material for sintering at a position within a range of 15% to 70%.

6.  The method for producing sintered ore according to any one of claims 1 to 5, wherein,
    with positions of an inlet and an outlet of the granulator in a length direction being indicated as 0% and 100%, respectively, the moisture is added to the compounded raw material for sintering at a position within a range of 20% to 50%.

7.  The method for producing sintered ore according to any one of claims 1 to 3, wherein,
    with positions of an inlet and an outlet of the granulator in a length direction being indicated as 0% and 100%, respectively, the moisture is added to the compounded raw material for sintering at a position within a range of 20% to 75%.

8.  The method for producing sintered ore according to any one of claims 1 to 3, wherein,
    with positions of an inlet and an outlet of the granulator in a length direction being indicated as 0% and 100%, respectively, the moisture is added to the compounded raw material for sintering at a position within a range of 30% to 60%.

9. The method for producing sintered ore according to any one of claims 1 to 8, wherein
a center of a spraying direction of a water spray nozzle when supplying the moisture is directed at compounded raw material for sintering located within a range of not less than 45 degrees to not more than 90 degrees in a drum rotation direction, with 0 degrees being a vertically downward direction, in a cross-section of the granulator perpendicular to a rotational axis.

10. The method for producing sintered ore according to any one of claims 1 to 9, wherein
a moisture content before the compounded raw material for sintering is charged into the granulator is not more than 5 mass%.

11. The method for producing sintered ore according to any one of claims 1 to 10, wherein
the mean droplet diameter is a droplet diameter that gives an arithmetic mean of droplet volumes or a Sauter mean diameter, and not less than 80 mass% of droplets of the moisture have a diameter within a range of 0.1 to 3 times the mean droplet diameter.

**Patentansprüche**

1. Verfahren zur Herstellung von gesintertem Erz, das gesintertes Erz durch Granulieren von compoundiertem Rohstoff zum Sintern, beinhaltend Eisenerzpulver mehrerer Typen von Marken, durch einen Granulator und Sintern von erlangtem granuliertem Rohstoff zum Sintern durch eine Sintermaschine erlangt, wobei

nicht weniger als 80 Masse-% der Feuchtigkeit, die während der Granulierung zuzugeben ist, mit einem mittleren Tröpfchendurchmesser von nicht weniger als 120 $\mu$m und nicht mehr als 2000 $\mu$m zugeführt werden,
**dadurch gekennzeichnet, dass** die Feuchtigkeit feine Teilchen mit einem Teilchendurchmesser von nicht mehr als 15 $\mu$m in einem Verhältnis von nicht weniger als 0,5 Masse-% und nicht mehr als 12 Masse-%, bezogen auf den compoundierten Rohstoff zum Sintern, enthält, und wobei der mittlere Tröpfchendurchmesser durch Durchführen einer Bildanalyse von nicht weniger als 100 Tröpfchen unter Verwendung einer Hochgeschwindigkeitskamera und Berechnen des arithmetischen mittleren Durchmessers gemessen wird.

2. Verfahren zur Herstellung von gesintertem Erz nach Anspruch 1, wobei
die Feuchtigkeit einen mittleren Tröpfchendurchmesser von nicht weniger als 560 $\mu$m und nicht mehr als 1570 $\mu$m aufweist.

3. Verfahren zur Herstellung von gesintertem Erz nach Anspruch 1 oder 2, wobei
die Feuchtigkeit einen mittleren Tröpfchendurchmesser von nicht weniger als 800 $\mu$m und nicht mehr als 1570 $\mu$m aufweist.

4. Verfahren zur Herstellung von gesintertem Erz nach einem der Ansprüche 1 bis 3, wobei
die Feuchtigkeit mit Positionen eines Einlasses und eines Auslasses des Granulators in einer Längsrichtung, die als 0 % bzw. 100 % angegeben sind, dem compoundierten Rohstoff zum Sintern in einer Position innerhalb eines Bereichs von 0 % bis 70 % zugegeben wird.

5. Verfahren zur Herstellung von gesintertem Erz nach einem der Ansprüche 1 bis 4, wobei
die Feuchtigkeit mit Positionen eines Einlasses und eines Auslasses des Granulators in einer Längsrichtung, die als 0 % bzw. 100 % angegeben sind, dem compoundierten Rohstoff zum Sintern in einer Position innerhalb eines Bereichs von 15 % bis 70 % zugegeben wird.

6. Verfahren zur Herstellung von gesintertem Erz nach einem der Ansprüche 1 bis 5, wobei
die Feuchtigkeit mit Positionen eines Einlasses und eines Auslasses des Granulators in einer Längsrichtung, die als 0 % bzw. 100 % angegeben sind, dem compoundierten Rohstoff zum Sintern in einer Position innerhalb eines Bereichs von 20 % bis 50 % zugegeben wird.

7. Verfahren zur Herstellung von gesintertem Erz nach einem der Ansprüche 1 bis 3, wobei
die Feuchtigkeit mit Positionen eines Einlasses und eines Auslasses des Granulators in einer Längsrichtung, die als 0 % bzw. 100 % angegeben sind, dem compoundierten Rohstoff zum Sintern in einer Position innerhalb eines Bereichs von 20 % bis 75 % zugegeben wird.

8. Verfahren zur Herstellung von gesintertem Erz nach einem der Ansprüche 1 bis 3, wobei
die Feuchtigkeit mit Positionen eines Einlasses und eines Auslasses des Granulators in einer Längsrichtung, die als 0 % bzw. 100 % angegeben sind, dem compoundierten Rohstoff zum Sintern in einer Position innerhalb eines Bereichs von 30 % bis 60 % zugegeben wird.

9. Verfahren zur Herstellung von gesintertem Erz nach einem der Ansprüche 1 bis 8, wobei
ein Zentrum einer Sprührichtung einer Wassersprühdüse beim Zuführen der Feuchtigkeit auf compoundierten Rohstoff zum Sintern gerichtet ist, der sich innerhalb eines Bereichs von nicht weniger als 45 Grad bis nicht mehr als 90 Grad in einer Trommeldrehrichtung, wobei 0 Grad eine vertikale Abwärtsrichtung ist, in einem Querschnitt des Granulators senkrecht zu einer Drehachse befindet.

10. Verfahren zur Herstellung von gesintertem Erz nach einem der Ansprüche 1 bis 9, wobei
ein Feuchtigkeitsgehalt, bevor der compoundierte Rohstoff zum Sintern in den Granulator gefüllt wird, nicht mehr als 5 Masse-% beträgt.

11. Verfahren zur Herstellung von gesintertem Erz nach einem der Ansprüche 1 bis 10, wobei
der mittlere Tröpfchendurchmesser ein Tröpfchendurchmesser ist, der ein arithmetisches Mittel von Tröpfchenvolumina oder einen Sauterdurchmesser ergibt, und nicht weniger als 80 Masse-% Tröpfchen der Feuchtigkeit einen Durchmesser innerhalb eines Bereichs des 0,1- bis 3-fachen des mittleren Tröpfchendurchmessers aufweisen.

**Revendications**

1. Procédé de production d'un minerai fritté qui permet d'obtenir un minerai fritté en granulant une matière première composée pour le frittage comportant de la poudre de minerai de fer de plusieurs types de marques par un granulateur, et en frittant la matière première granulée obtenue pour le frittage par un four de frittage, dans lequel

au moins 80 % en masse de l'humidité à ajouter pendant la granulation est fournie à un diamètre de gouttelette moyen d'au moins 120 $\mu$m et d'au plus 2 000 $\mu$m,
**caractérisé en ce que** l'humidité contient des particules fines d'un diamètre de particule d'au plus 15 $\mu$m à raison d'au moins 0,5 % en masse et d'au plus 12 % en masse par rapport à la matière première composée pour le frittage, et dans lequel le diamètre de gouttelette moyen est mesuré en effectuant une analyse d'image d'au moins 100 gouttelettes à l'aide d'une caméra à grande vitesse et en calculant le diamètre moyen arithmétique.

2. Procédé de production d'un minerai fritté selon la revendication 1, dans lequel
l'humidité a un diamètre de gouttelette moyen d'au moins 560 $\mu$m et d'au plus 1 570 $\mu$m.

3. Procédé de production d'un minerai fritté selon la revendication 1 ou 2, dans lequel
l'humidité a un diamètre de gouttelette moyen d'au moins 800 $\mu$m et d'au plus 1 570 $\mu$m.

4. Procédé de production d'un minerai fritté selon l'une quelconque des revendications 1 à 3, dans lequel, avec des positions d'une entrée et d'une sortie du granulateur dans une direction de longueur qui sont indiquées comme 0 % et 100 %, respectivement, l'humidité est ajoutée à la matière première composée pour le frittage au niveau d'une position comprise dans une plage allant de 0 % à 70 %.

5. Procédé de production d'un minerai fritté selon l'une quelconque des revendications 1 à 4, dans lequel, avec des positions d'une entrée et d'une sortie du granulateur dans une direction de longueur qui sont indiquées comme 0 % et 100 %, respectivement, l'humidité est ajoutée à la matière première composée pour le frittage au niveau d'une position comprise dans une plage allant de 15 % à 70 %.

6. Procédé de production d'un minerai fritté selon l'une quelconque des revendications 1 à 5, dans lequel, avec des positions d'une entrée et d'une sortie du granulateur dans une direction de longueur qui sont indiquées comme 0 % et 100 %, respectivement, l'humidité est ajoutée à la matière première composée pour le frittage au niveau d'une position comprise dans une plage allant de 20 % à 50 %.

7. Procédé de production d'un minerai fritté selon l'une quelconque des revendications 1 à 3, dans lequel, avec des positions d'une entrée et d'une sortie du granulateur dans une direction de longueur qui sont indiquées comme 0 % et 100 %, respectivement, l'humidité est ajoutée à la matière première composée pour le frittage au niveau d'une position comprise dans une plage allant de 20 % à 75 %.

8. Procédé de production d'un minerai fritté selon l'une quelconque des revendications 1 à 3, dans lequel, avec des positions d'une entrée et d'une sortie du granulateur dans une direction de longueur qui sont indiquées comme 0 % et 100 %, respectivement, l'humidité est ajoutée à la matière première composée pour le frittage au niveau d'une position comprise dans une plage allant de 30 % à 60 %.

9. Procédé de production d'un minerai fritté selon l'une quelconque des revendications 1 à 8, dans lequel
un centre d'une direction de pulvérisation d'une buse de pulvérisation d'eau lors de la fourniture de l'humidité est dirigé vers une matière première composée pour le frittage située dans une plage allant d'au moins 45 degrés à d'au plus 90 degrés dans une direction de rotation de tambour, avec 0 degré qui est une direction verticale vers le bas, dans une section transversale du granulateur perpendiculaire à un axe de rotation.

10. Procédé de production d'un minerai fritté selon l'une quelconque des revendications 1 à 9, dans lequel la teneur en humidité avant que la matière première composée pour le frittage ne soit chargée dans le granulateur est d'au plus 5 % en masse.

11. Procédé de production d'un minerai fritté selon l'une quelconque des revendications 1 à 10, dans lequel le diamètre de gouttelette moyen est un diamètre de gouttelette qui donne une moyenne arithmétique de volumes de gouttelettes ou un diamètre moyen de Sauter, et au moins 80 % en masse des gouttelettes de l'humidité ont un diamètre compris dans une plage allant de 0,1 à 3 fois le diamètre de gouttelette moyen.

FIG. 1

FIG. 2

FIG. 3

Droplet diameter

FIG. 4

Particle size (mm)

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016172903 A

**Non-patent literature cited in the description**

- **KAWAHARA et al.** Simultaneous Measurements of Droplet Diameter and Velocity Using Phase Doppler Anemometer (PDA/PDPA). *The Japan Society of Fluid Mechanics*, 2008, vol. 27, 303

- **FUKUTAKE**. *Iron and Steel*, 1971, vol. 57